# EUROPEAN PATENT APPLICATION

(11) **EP 4 789 932 A1**
(43) Date of publication of application: **12.08.2026**
(21) Application number: 25226617.6
(22) Date of filing: 22.12.2025
(51) Int. Cl.: B60T 13/66

(54) **SYSTEMS AND METHODS FOR AUTONOMY BRAKING**

(30) Priority: 07.02.2025 IN 202511010380; 10.02.2025 US 202519348479
(71) Applicant: Deere & Company, Moline, IL 61265 (US)
(72) Inventor: SCHMIDT, Martin, Cedar Falls (US); EDEN, Samuel, Grovetown (US); GALLEN, John J, Moline (US); RAIBAGI, Rajgopal, Cedar Falls (US); TOTT, Jeffrey M, New Hartford (US); BARRETT, Matthew G, Urbandale (US)
(74) Representative: Reddie & Grose LLP

(57) **Abstract**

A brake system is includes a primary brake, the primary brake being an electrohydraulic brake, a redundant brake, the redundant brake being spring actuated, and at least one controller configured to control the primary brake and the redundant brake in response to a stopping signal such that the at least one controller is configured to cause the brake system to actuate the primary brake and the redundant brake simultaneously or sequentially.

## Description

### CROSS-REFERENCE TO RELATED APPLICATIONS

This application claims priority under 35 U.S.C. § 119 to Indian Provisional Application No. 202511010380, filed February 7, 2025, the entire contents of which are hereby incorporated by reference.

### FIELD

Example embodiments are related to systems and methods for autonomous braking.

### BACKGROUND

Vehicles, such as tractors, are being designed to operate autonomously.

### SUMMARY

At least one example embodiment provides a brake system. The brake system includes a primary brake, the primary brake being an electrohydraulic brake, a redundant brake, the redundant brake being spring actuated, and at least one controller configured to control the primary brake and the redundant brake in response to a stopping signal such that the at least one controller is configured to cause the brake system to actuate the primary brake and the redundant brake simultaneously or sequentially.

According to at least one example embodiment, the at least one controller includes a first controller and a second controller. The second controller is communicatively coupled to the first controller and a powertrain.

According to at least one example embodiment, the at least one controller includes a third controller communicatively coupled to the first controller and the primary brake.

According to at least one example embodiment, the at least one controller includes a fourth controller communicatively coupled to the first controller and the redundant brake.

According to at least one example embodiment, the primary brake includes a primary valve and a pressure sensor operatively coupled to the primary valve. In response to the first controller receiving the stopping signal, the first controller is configured to communicate a first braking signal to the second controller, a second braking signal to the third controller, and a third braking signal to the fourth controller. The second controller is configured to control the powertrain to set a neutral position. The third controller is configured to actuate the primary valve.

According to at least one example embodiment, the fourth controller is configured to communicate the stopping signal to the redundant brake such that the redundant brake is configured to be engaged at a second time interval.

According to at least one example embodiment, the redundant brake is configured to be engaged in response to a failed status communicated to the fourth controller from the third controller.

According to at least one example embodiment, the redundant brake is configured to be engaged in response to a zero-speed status communicated to the fourth controller from the second controller.

According to at least one example embodiment, the redundant brake is coupled to a drive shaft.

According to at least one example embodiment, the redundant brake further includes supply and return hose connections.

According to at least one example embodiment, the stopping signal is initiated by at least one of a sensor, a predefined parameter, and a manual trigger.

At least one example embodiment provides a vehicle. The vehicle includes a chassis, a drive shaft, and a brake system. The brake system includes a primary brake, the primary brake being an electrohydraulic brake, a redundant brake coupled to the chassis and the drive shaft, the redundant brake being spring actuated, and at least one controller configured to control the primary brake and the redundant brake in response to a stopping signal such that the at least one controller is configured to cause the brake system to actuate the primary brake and the redundant brake simultaneously or sequentially.

According to at least one example embodiment, the drive shaft is a mechanical front wheel drive shaft.

According to at least one example embodiment, the vehicle further includes a plate. The plate is configured to couple to the redundant brake and the chassis.

According to at least one example embodiment, the vehicle further includes a brake resolution manifold in fluid communication with the primary brake.

According to at least one example embodiment, the at least one controller includes a first controller and a second controller. The second controller is communicatively coupled to the first controller and a powertrain.

According to at least one example embodiment, the at least one controller includes a third controller communicatively coupled to the first controller and the primary brake.

According to at least one example embodiment, the at least one controller includes a fourth controller communicatively coupled to the first controller and the redundant brake.

According to at least one example embodiment, the primary brake includes a primary valve and a pressure sensor operatively coupled to the primary valve. In response to the first controller receiving the stopping signal, the first controller is configured to communicate a first braking signal to the second controller, a second braking signal to the third controller, and a third braking signal to the fourth controller. The second controller is configured to control the powertrain to set a neutral position. The third controller is configured to actuate the primary valve.

According to at least one example embodiment, the fourth controller is configured to communicate the stopping signal to the redundant brake such that the redundant brake is configured to be engaged at a second time interval.

According to at least one example embodiment, the redundant brake is configured to be engaged in response to a failed status communicated to the fourth controller from the third controller.

According to at least one example embodiment, the redundant brake is configured to be engaged in response to a zero-speed status communicated to the fourth controller from the second controller.

According to at least one example embodiment, the redundant brake is coupled to a drive shaft.

According to at least one example embodiment, the redundant brake further includes supply and return hose connections.

According to at least one example embodiment, the stopping signal is initiated by at least one of a sensor, a predefined parameter, and a manual trigger.

At least one example embodiment provides a method of operating a brake system. The method includes controlling a primary brake in response to a stopping signal, the primary brake being an electrohydraulic brake, controlling a redundant brake in response to a stopping signal, the redundant brake being spring actuated, and causing the brake system to actuate the primary brake and the redundant brake simultaneously or sequentially.

According to at least one example embodiment, the method further includes controlling a powertrain to set a neutral position.

According to at least one example embodiment, the method further includes actuating a primary valve of the primary brake.

According to at least one example embodiment, the method further includes engaging the redundant brake at a second time interval.

According to at least one example embodiment, the method further includes engaging the redundant brake in response to a failed status of the primary brake.

According to at least one example embodiment, the method further includes engaging the redundant brake in response to a zero-speed status.

### BRIEF DESCRIPTION OF THE DRAWINGS

Example embodiments will be more clearly understood from the following detailed description taken in conjunction with the accompanying drawings. FIGS. 1-11 represent non-limiting, example embodiments as described herein.
FIG. 1A is a component diagram of a vehicle, according to some example embodiments.
FIG. 1B is a schematic diagram of the vehicle of FIG. 1A, according to some example embodiments.
FIG. 2 is a block diagram of an autonomous brake system, according to some example embodiments.
FIG. 3 is a perspective view of a vehicle including a brake system, according to some example embodiments.
FIG. 4 is a perspective view of the brake system of FIG. 3, according to some example embodiments.
FIG. 5 is a perspective view of the brake system of FIG. 3, according to some example embodiments.
FIG. 6A is an isolated view of a redundant brake of the brake system of FIG. 3, according to some example embodiments.
FIG. 6B is a cross-sectional view of a redundant brake of the brake system of FIG. 3, according to some example embodiments.
FIG. 7 is a bottom perspective view of the vehicle of FIG. 1, according to some example embodiments.
FIG. 8 is a block diagram of a hydraulic system of the brake system of FIG. 3, according to some example embodiments.
FIG. 9 is a block diagram of a system boundary of the brake system of FIG. 3, according to some example embodiments.
FIG. 10 is a block diagram of a functional architecture of the brake system of FIG. 3, according to some example embodiments.
FIG. 11 is a flow chart of a method of operating a brake system, according to some example embodiments.

### DETAILED DESCRIPTION

Some example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware. Such existing hardware may include one or more Central Processing Units (CPUs), digital signal processors (DSPs), application-specific-integrated-circuits, field programmable gate arrays (FPGAs) computers or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In this application, including the definitions below, the term 'module' or the term 'controller' may be replaced with the term "circuit." The term 'module' may refer to, be part of, or include processor hardware (shared, dedicated, or group) that executes code and memory hardware (shared, dedicated, or group) that stores code executed by the processor hardware.

The module may include one or more interface circuits. In some examples, the interface circuits may include wired or wireless interfaces that are connected to controller area network (CAN), a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

Further, at least one embodiment of the invention relates to a non-transitory computer-readable storage medium comprising electronically readable control information stored thereon, configured in such that when the storage medium is used in a controller, at least one embodiment of the method is carried out.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory.

Even further, any of the aforementioned methods may be embodied in the form of a program. The program may be stored on a non-transitory computer readable medium and is adapted to perform any one of the aforementioned methods when run on a computer device (a device including a processor). Thus, the non-transitory, tangible computer readable medium is adapted to store information and is adapted to interact with a data processing facility or computer device to execute the program of any of the above mentioned embodiments and/or to perform the method of any of the above mentioned embodiments.

The computer readable medium or storage medium may be a built-in medium installed inside a computer device main body or a removable medium arranged so that it can be separated from the computer device main body. The term computer-readable medium, as used herein, does not encompass transitory electrical or electromagnetic signals propagating through a medium (such as on a carrier wave); the term computer-readable medium is therefore considered tangible and non-transitory. Furthermore, various information regarding stored images, for example, property information, may be stored in any other form, or it may be provided in other ways.

The term code, as used above, may include software, firmware, and/or microcode, and may refer to programs, routines, functions, classes, data structures, and/or objects.

The term memory is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices); volatile memory devices (including, for example static random access memory devices or a dynamic random access memory devices); magnetic storage media (including, for example an analog or digital magnetic tape or a hard disk drive); and optical storage media (including, for example a CD, a DVD, or a Blu-ray Disc). Examples of the media with a built-in rewriteable non-volatile memory, include but are not limited to memory cards; and media with a built-in ROM, including but not limited to ROM cassettes; etc. Furthermore, various information regarding stored images, for example, property information, may be stored in any other form, or it may be provided in other ways. The term data storage device may be used interchangeably with computer-readable medium.

Vehicles, such as tractors, are being designed to operate autonomously. While operating autonomously, a braking function is still needed, for example, to control vehicle train speed, slow the vehicle train, bring the vehicle to a complete stop (as needed) in the work cycle, or when an object is detected near the tractor and/or connected implement. Current tractor service and backup brake architectures are designed to be actuated by an operator sitting in the operator station of the tractor (e.g., cab of the tractor). The operator can apply the brakes in the cab using foot or hand forces to actuate a pedal or lever. However, current brake systems do not typically support the requirements for autonomy, which include redundancy, an electrically actuated brake, the electrically actuated brake being connected to an autonomy interface, and communication between the components.

At least some example embodiments as described herein provide a retrofit solution to existing vehicles (e.g., 5ML Open Operator Station (OOS) tractors) and implementing autonomy in such vehicles, or tractors, which have aftermarket cabs installed. Existing tractors are primarily mechanical braking, and autonomy requires addition of electrohydraulic enabled systems for braking and hold. Accordingly, to at least some example embodiments, a brake system described herein provides a minimally invasive design for faster and lower-cost installation and enables autonomous functionality in existing, aftermarket vehicles.

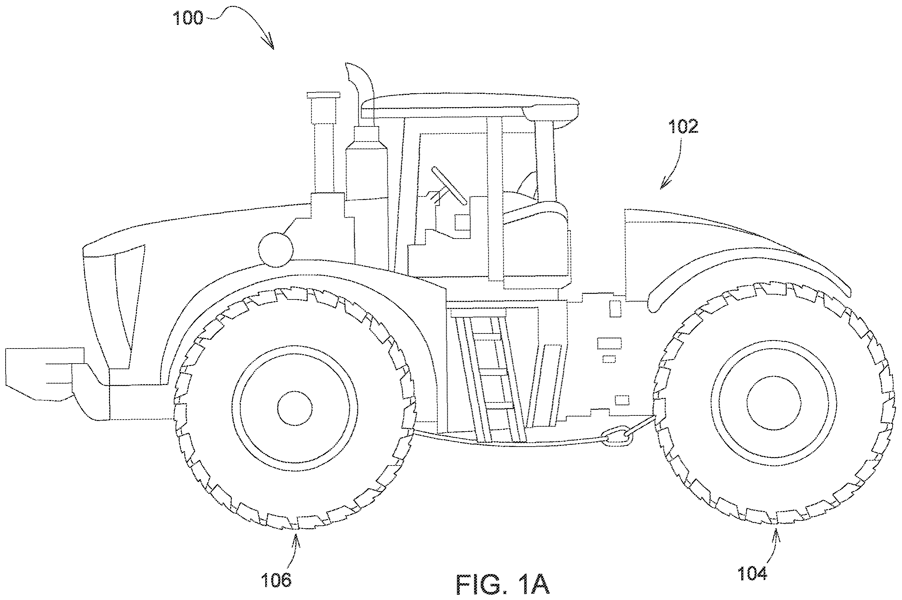

FIG. 1A illustrates an example vehicle that may utilize one or more portions of the aspects and examples described herein.

A vehicle 100, such as a tractor, can perform different operations, such as a ground working operation in a field. In some implementations, the vehicle 100 has wheels 104, 106 installed thereon. In other implementations, the vehicle 100 has track systems (not shown) instead of wheels installed on the rear or both the front and rear of the vehicle 100.

The vehicle 100 includes a chassis 102, which provides attachment points for the vehicle 100. For example, a work tool (e.g., a bucket, fork, blade, auger, or hammer) can be connected to the front or back of the chassis 102. The work tool is movably connected to the chassis 102 in some examples.

The vehicle 100 further includes a brake system as described in more detail herein. For example, the brake system is configured to autonomously apply the brakes and slow or stop the vehicle 100, such as to apply brake force(s) to control vehicle train speed, slow the vehicle train, bring the vehicle 100 to a complete stop in the work cycle, or when an object is detected near the tractor and/or implement.

While various examples are described in connection with a tractor or control arrangement having a particular configuration, the systems and methods described herein may also be utilized with other types of vehicles and implements. For example, the vehicle may comprise another utility-type vehicle, such as a truck, hauler, semi-tractor, or any vehicle that uses a brake system, such as any vehicle with one or more brakes. For example, one or more herein described aspects can be implemented in a work vehicle, such as a backhoe loader, but may be any work vehicle with a brake system, such as an articulated dump truck, compact track loader, crawler (e.g., crawler dozer, crawler loader), excavator, feller buncher, forwarder, harvester, knuckle boom loader, motor grader, scraper, skidder, sprayer, skid steer, tractor, tractor loader, and wheel loader, among others. The various examples can also be implemented in other work vehicles, passenger vehicles, or other equipment having brakes.

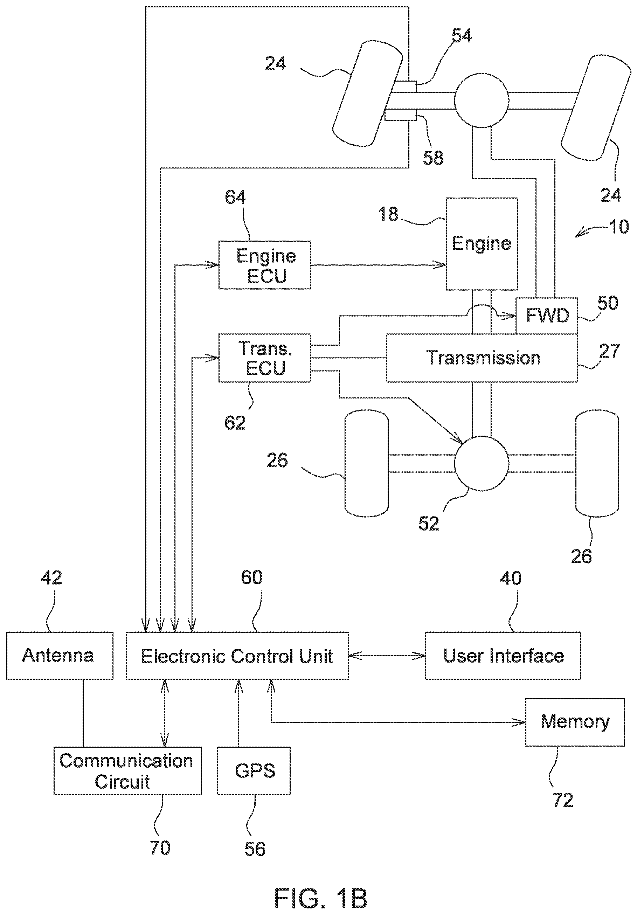

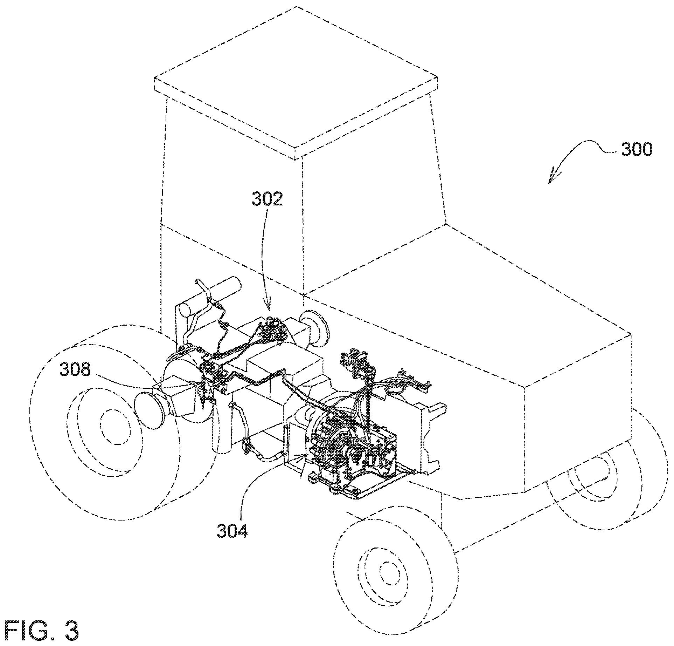

FIG. 1B is a simplified schematic diagram of the vehicle 100 and a control system according to one or more example embodiments. The transmission 127 includes an electronically controlled front wheel drive control unit 150 and an electronically controlled differential lock control unit 152. The front wheel drive control unit 150 is coupled to the steerable front wheels 124. When the front wheel drive control unit 150 is on, torque is transmitted from the transmission 127 to the front wheels 124. When the front wheel drive control unit 150 is off, torque is not transmitted from the transmission to the front wheels 124. As will be described herein, a redundant brake, not illustrated in FIG. 1B but illustrated in at least FIG. 3, is coupled between the transmission 127 and the front wheel drive control unit 150.

The differential lock control unit 152 is coupled to the driven rear wheels 126. When the differential lock control unit 152 is unlocked (off, open differential), it allows each of the rear wheels 126 to rotate at different speeds, such as when negotiating a turn. By contrast, when the differential lock control unit 152 is on or locked, it forces both left and right wheels on the same axle to rotate at the same speed under nearly all circumstances.

A wheel angle sensor 154 senses the angular position of the front wheels 124. A GPS unit 156 provides a vehicle position signal. A wheel speed sensor 158 provides a wheel speed signal.

A main electronic control unit (ECU) 160 is connected to the wheel angle sensor 154, the GPS unit 156 and the wheel speed sensor 158. The ECU 160 communicates with a transmission ECU 162 and with an engine ECU 164.

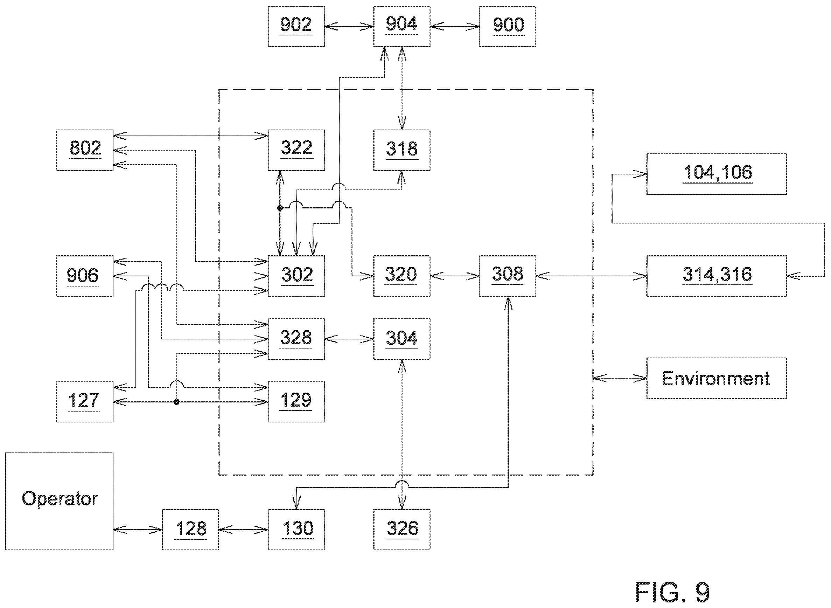

The transmission ECU 162 controls the transmission 127 and provides control signals to the front wheel drive control unit 150 and to the differential lock control unit 152. In some example embodiments, the transmission ECU 162 controls the transmission 127 based on a transmission pressure sensor 129 (e.g., see FIG. 9). The engine ECU 164 controls the engine 118. The user interface 140 is connected to the main ECU 160. The GPS unit 156 is a conventional GPS unit. In one embodiment, the GPS unit 156 is configured to locate the position of the vehicle 100 within the field 122.

A communication circuit 170 is coupled to the ECU 160 and to the antenna 142. The communication circuit 170 is configured to transmit signals generated by the ECU 160, which in some applications have been generated in response to information submitted by an operator through the user interface 140. The communication circuit 170 is further configured to receive signals from the antenna 142. A memory 172 is operatively coupled to the ECU 160 and is configured to store information. In some embodiments, the communication circuit 170 is used for internal communication among devices or circuits located in the vehicle.

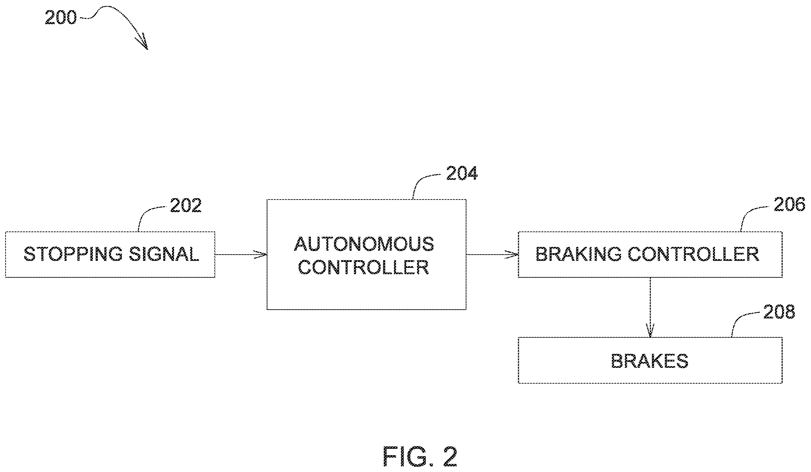

The vehicle 100 in one example is a tractor that includes and/or operates with an autonomous brake system 200 as illustrated in FIG. 2. The autonomous brake system 200 includes at least one autonomous controller 204 (e.g., a first controller 900 described further herein) configured to receive a stopping signal (e.g., a wireless brake control signal) and transmit the received stopping signal to at least one braking controller 206 (e.g., at least one of a second controller 902, a third controller 904, or a fourth controller 906, described further herein). In some examples, the autonomous controller 204 processes or pre-processes the received stopping signal before transmitting the signal to the braking controller 206. In some examples, the autonomous controller 204 is a transmission and reception device (e.g., a transceiver) that operates to communicate the stopping signal 202 to the braking controller 206.

The braking controller 206 in various examples is configured to control operation of one or more brakes 208 (e.g., at least one of a primary brake 302 and a redundant brake 304) as described in more detail herein. That is, the braking controller 206 receives the stopping signal 202 and controls operation of one or more components of the brakes 208 (or associated components) to cause a braking force to be applied to slow or stop the vehicle 100. For example, the stopping signal 202 may be generated from a sensor (e.g. an object is in front of the vehicle), a predefined parameter or tendering stop (e.g., as required by a job computer), or a manual trigger such as from a remote operator requesting to stop the vehicle.

It should be noted that in some examples, the braking controller 206 controls brake operation of the brakes 208 of the vehicle. In some examples, the braking controller 206 controls brake operation of trailer brakes in a trailer or other implement being towed by the vehicle 100. The braking controller 206 can control the brake operation of different brakes associated with different vehicles. It should be noted that one or components or operations of the autonomous brake system 200 can be combined or separated and the functional/operational blocks in FIG. 2 are merely shown for example. For example, while the autonomous controller 204 is shown connected to the braking controller 206 and then to the brakes 208 in series, other configurations and connections are contemplated. For example, the autonomous controller 204 in some arrangements is configured to send a signal directly to the brakes 208. In this way, parallel signals can be output from the autonomous controller 204 as an added redundancy.

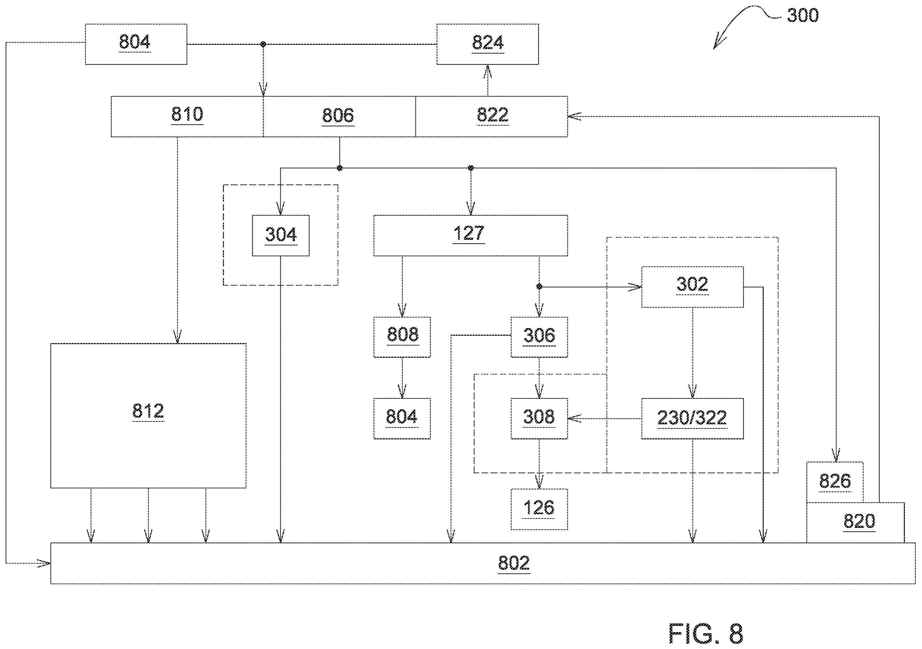

In various examples, multiple power supplies (e.g., hydraulic power sources) and multiple valves are implemented to provide normal operation braking and failure operation braking. That is, backup and/or redundant control is provided in various examples that allows for switching from main braking components to backup braking components, such as in the event of a failure one or more of the main braking components. One example of a brake system 300 is shown in FIG. 3 and can include the brakes 208 (e.g., a primary brake 302 and a redundant brake 304) which operate or form part of the autonomous brake system 200. In other examples, the brakes 208 are front and rear brakes. It should be appreciated that the brakes 208 can be brakes of any type and configured in different ways. The brakes 208 are operated and/or controlled by one or more arrangements described herein, such as shown in FIGS. 8-11.

FIG. 3 illustrates a vehicle (e.g., vehicle 100) including a brake system 300.

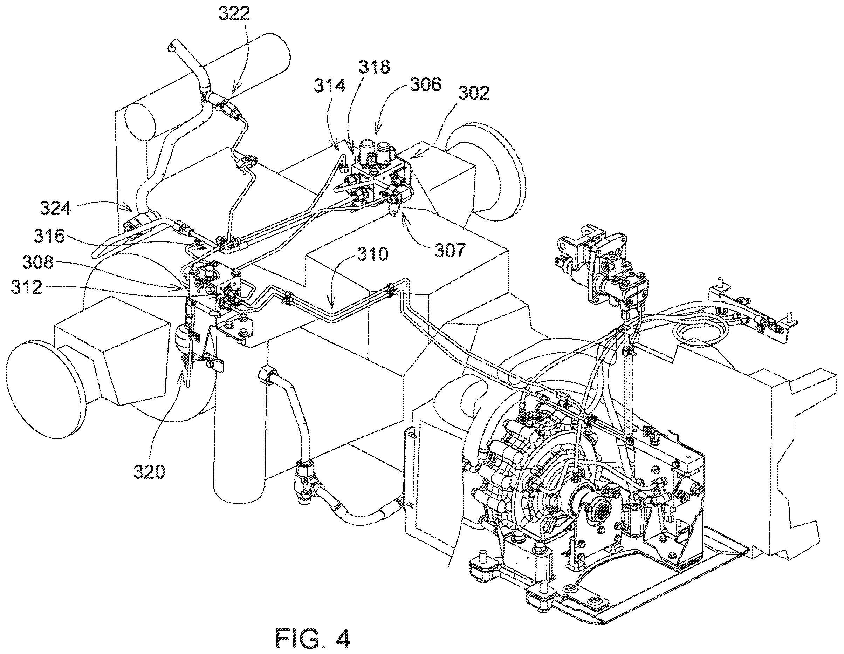

The brake system 300 includes a primary brake 302. The primary brake 302 may be an electrohydraulic brake (e.g., an electrohydraulic service brake (EHSB)). The primary brake 302 may be configured to operate as a primary way to stop the vehicle. As will be described further herein, the primary brake 302 is supplied by a transmission block of the transmission 127 and returns to a differential housing of the vehicle 100 (e.g., see FIGS. 4, 8 and 9).

The brake system 300 includes a brake resolution manifold (BRM) 308. The BRM 308 may be positioned above a filter housing of the vehicle. The BRM 308 is configured to operate as a shuttle valve between the primary brake 302 and manual brakes of the vehicle (e.g., in a cabin of the vehicle, not shown). For example, the BRM 308 is in fluid communication with the primary brake 302.

The brake system 300 includes a redundant brake 304. The redundant brake 304 may be a spring actuated brake (e.g., a spring-applied hydraulic release (SAHR)). In some example embodiments, the redundant brake 304 is an electrohydraulic brake. The redundant brake 304 may be configured to operate as a redundant way to stop the vehicle if the primary brake 302 fails to stop the vehicle in autonomy (e.g., a pressure loss occurs as the pump fails). As the mechanism of the redundant brake 304 is spring applied, it is a backup method to stop the vehicle as no oil pressure is required to engage the redundant brake 304. This prevents the tractor from having a redundant electric power supply. Similar to the primary brake 302, the redundant brake is supplied by the transmission block of the transmission (e.g., see FIGS. 8-9).

Referring now to FIG. 4, FIG. 4 illustrates a detailed view of a portion of the brake system 300, with particularity to the primary brake 302.

The primary brake 302 includes a primary valve 306. The primary valve 306 may include a proportional valve to control braking in a modulated way and includes an on/off valve to prevent unintended engagement of the brakes. The brake system 300 includes a supply source 307 such that the primary valve 306 is supplied from a 20-bar transmission block (e.g., see also FIG. 8).

As described herein, the BRM 308 is configured to operate as a shuttle valve between the primary brake 302 and manual brakes of the vehicle (e.g., in a cabin of the vehicle, not shown). Accordingly, the brake system 300 includes manual brake actuation lines 310 routed between the BRM 308 and the manual brakes, and primary brake valve lines 312 routed between the BRM 308 and the primary valve 306. For manual braking, pressure corresponding with a pedal position 128 of a left or right brake pedal is sent to a left axle brake 314 and a right axle brake 316 via a service brake valve 130 and the BRM 308 (e.g., see FIG.9). For braking with the primary brake 302, the pressure is sent to the left axle brake 314 and the right axle brake 316 depending on the position of the proportional valve (e.g., see also FIG. 8).

The brake system 300 further includes a pressure sensor 318. The pressure sensor 318 is operatively coupled to the primary valve 306. The pressure sensor 318 is configured to measure the pressure of the primary valve 306.

The brake system 300 further includes a de-aerator 320. The de-aerator 320 is fluidly coupled to the primary valve 306. For example, oil flows through the primary valve 306 and to the de-aerator 320. The de-aerator 320 is configured to reduce air from the brake system 300 such that the pressure within the brake system 300 is predominantly generated by the oil. Further, the de-aerator 320 is fluidly coupled to the BRM 308 such that the de-aerated oil flows from the de-aerator 320 to the BRM 308 and may pressurize the rear axle brakes (e.g., the left axle brake 314 and the right axle brake 316).

The brake system 300 further includes a vent 322. For example, the vent 322 is an aerated oil vent to hitch return via an orifice-check valve. The orifice-check valve is configured to retain the oil in a service brake system (e.g., for manual braking), thus maintaining the health of the service brake system.

The brake system 300 further includes a primary valve return 324 directing the oil to a differential housing.

In various example embodiments, the vehicle 100 may include a manual lever (not shown) configured to actuate the primary brake 302 from within the vehicle in response to a manual command from an operator.

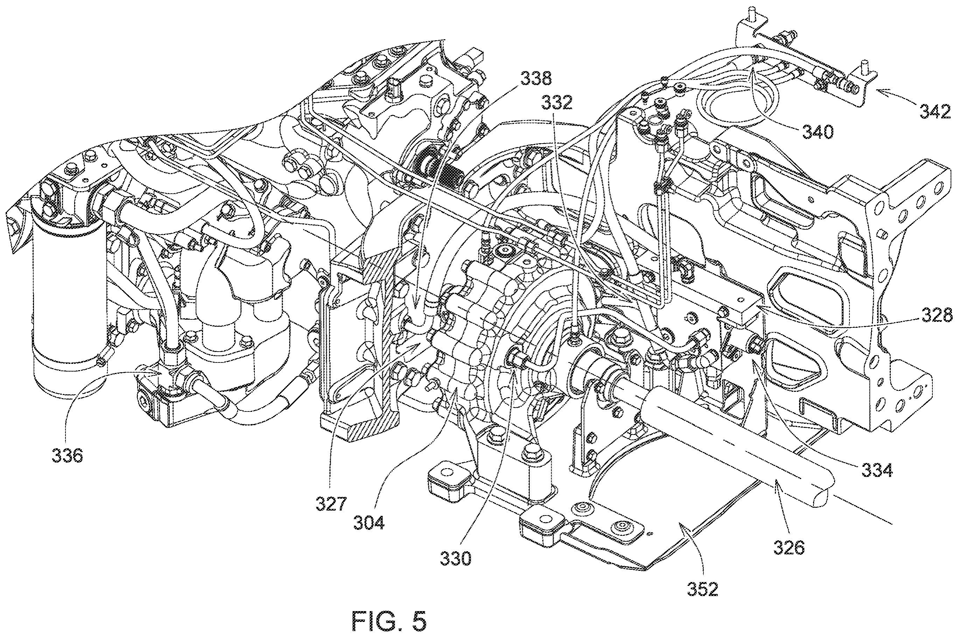

Referring now to FIG. 5, FIG. 5 illustrates a detailed view of a portion of the brake system 300, with particularity to the redundant brake 304.

The brake system 300 includes the redundant brake 304 coupled to a driveshaft 326. For instance, the driveshaft 326 is a mechanical front wheel drive driveshaft coupled to a front axle of the vehicle 100. The redundant brake 304 may further be coupled to an output shaft 327 of the transmission 127. For example, as described further herein, when the redundant brake 304 is engaged, a spring of the redundant brake 304 (e.g., a spring-applied hydraulic release brake) will push the clutch disk toward the casting and will cause friction with the output shaft 327 to bring the vehicle 100 to a stop.

The brake system 300 includes a second manifold 328. The second manifold 328 is configured to operate as an on/off shuttle valve for the redundant brake 304. For example, the second manifold 328 is configured to accommodate disengagement of the redundant brake 304 via a release/actuation line 330. Further, the second manifold 328 includes a sump valve 332 and a supply valve 334. The sump valve 332 and the supply valve 334 are configured to provide a redundancy to prevent unintended engagement. The redundant brake 304 is supplied with oil by a transmission pump of the vehicle 100.

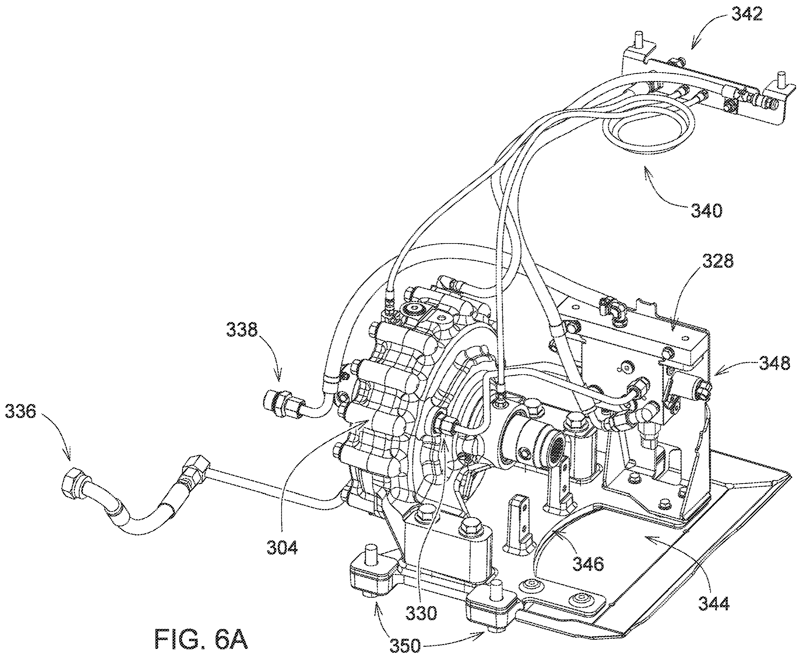

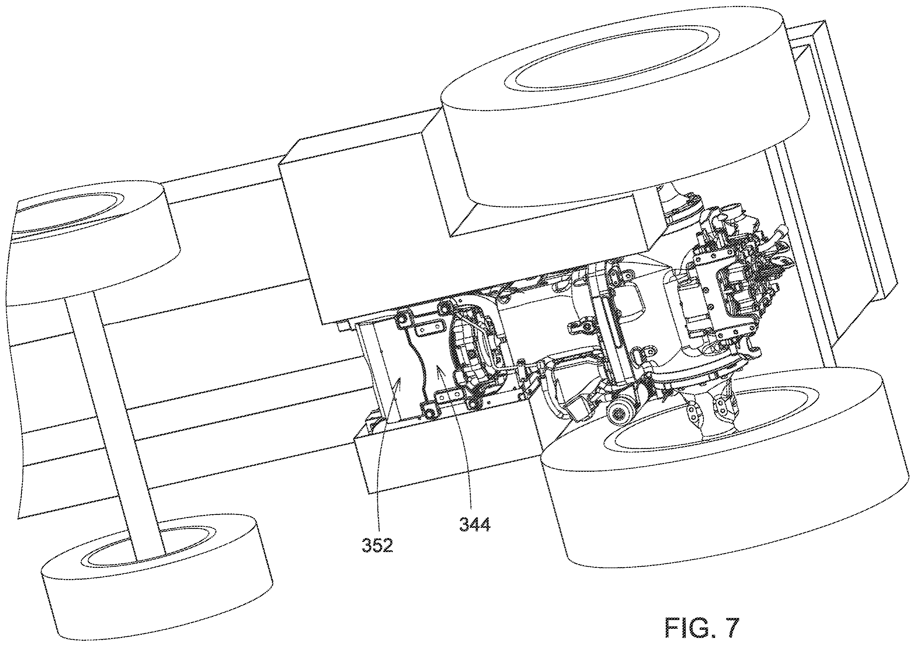

The redundant brake 304 may be coupled to a chassis 352 under the vehicle 100 (e.g., see FIG. 7). Once positioned, hose connections may be made. For example, the brake system 300 includes a supply source pressure relief valve 336 at a pump strainer housing. Further, the brake system 300 includes an oil return 338 at a front of the transaxle of the transmission 127 of the vehicle 100. Additionally, service hoses 340 (e.g., grease hoses, a breather hose, and a tow-mode hose) may be bundled and attached to a bracket 342 (e.g., shown in FIG. 6A).

In various example embodiments, the vehicle 100 may include a manual lever (not shown) configured to actuate the redundant brake 304 from within the vehicle in response to a manual command from an operator.

Referring now to FIG. 6A, FIG. 6A illustrates an isolated view of the redundant brake 304 and corresponding connections such as the release/actuation line 330, the supply source pressure relief valve 336, the oil return 338, and the service hoses 340.

The brake system 300 may include a plate 344. The redundant brake 304 may be coupled to the plate 344. The plate 344 includes a first platform 346 and a second platform 348 perpendicularly to the first platform 346. Accordingly, the redundant brake 304 may be coupled to the first platform and the second manifold 328 may be coupled to the second platform 348. The first platform 346 includes at least one connection point 350. For example, as shown in FIG. 6A, the first platform 346 may include four connection points 350. The plate 344 may be coupled to the vehicle 100 via the at least one connection point 350. For example, the at least one connection point 350 may configured to receive a bolt. Accordingly, the plate 344 may be coupled to the chassis 352 of the vehicle (e.g., see FIG. 7). In various example embodiments, a mid-fuel tank will be removed from a tractor (e.g., a 5ML OOS Deere tractor) to facilitate space for the redundant brake 304. Further the driveshaft 326 may be shortened to facilitate space for the redundant brake 304.

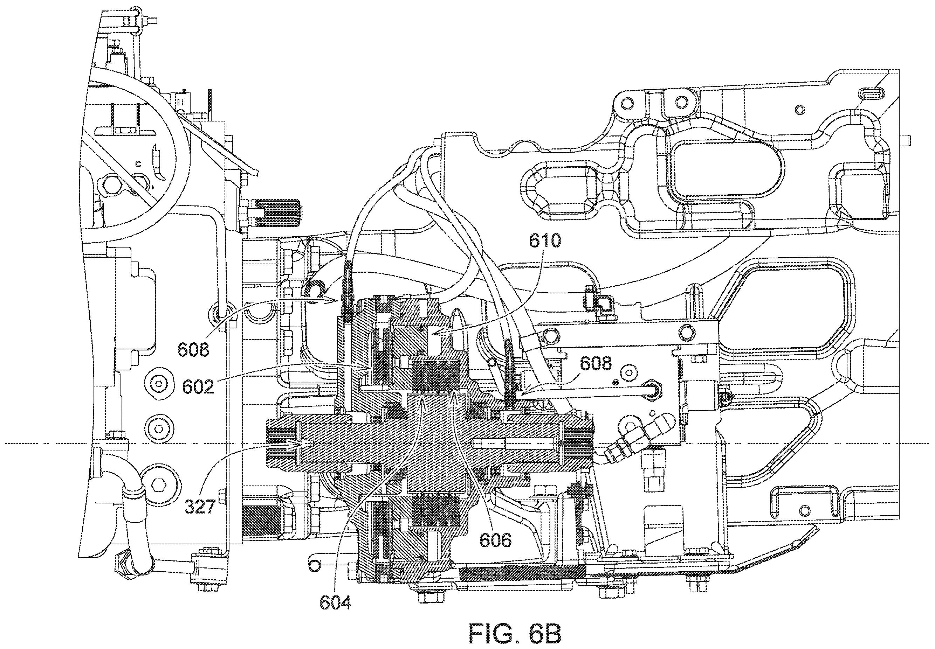

Referring now to FIG. 6B, FIG. 6B illustrates a cross-sectional view of the redundant brake 304.

The redundant brake 304 includes a spring 602. The spring 602 may be a Belleville spring. The redundant brake 304 includes at least one clutch disk 604 and at least one spacer disk 606. In some example embodiments, as shown in FIG. 6B, the redundant brake 304 includes three clutch disks 604 and a plurality of spacer disks 606 such that each of the three clutch disks 604 are separated by at least one of the plurality of spacer disks 606. Further, the redundant brake 304 includes a grease port 608 and a release actuator 610. The grease port 608 provides a lubricant to the at least one clutch disk 605, the at least one spacer disk 606, and the release actuator 610. When the supply valve 334 is actuated, the oil flows through and pressurizes the redundant brake 304. Under a pressurized, or disengaged, state, the release actuator 610 is released as the spring 602 is compressed by the pressure of the oil, and friction is not applied between a static casting mounting on the tractor chassis and the rotating clutch disks 604. To engage the redundant brake 304, the sump valve 332 and the supply valve 334 reroute the oil, thus releasing the pressure from the redundant brake 304, and the spring 602 will apply force and push the clutch disks 604 toward the casting to cause friction with the casting and bring the vehicle 100 to a stop.

Referring now to FIG. 8, FIG. 8 is a block diagram of a hydraulic system of a brake system (e.g., the brake system 300).

As described herein, the brake system 300 includes the primary brake 302 and the redundant brake 304. The primary brake 302 and the redundant brake 304 are both ultimately supplied by a transmission sump/tank 802. For example, oil will flow from the transmission sump/tank 802 as a transmission lube 804 and through a transmission pump 806 to the transmission 127 (e.g., a 20 bar transmission block). The supply will flow through the primary brake 302, through the de-aerator 320 and to the BRM 308. The primary valve 306 is also supplied by the transmission 127 which also flows through to the BRM 308 and to the rear wheels 126. The supply from the transmission 127 additionally is provided to an oil cooler and acts as a transmission lube 804.

Concurrently, the supply from the transmission sump/tank 802 is provided to a variable flow piston pump 810. From there, oil flows to a tractor hydraulics system 812, from which the oil flows back to the transmission sump/tank 802. The tractor hydraulics system 812 may include a priority valve, which directs the flow to at least one of a steering valve, a mid-selective control valve, and a rear selective control valve.

Further, the transmission sump/tank 802 may feed flow through a strainer 820, the strainer 820 having received the oil from the transmission pump 806 via a relief valve 826, and through to a variable flow charge pump 822. From the variable flow charge pump 822, oil may flow through a filter 824 and back through to at least one of the transmission sump/tank 802, the primary valve 306, and the variable flow piston pump 810.

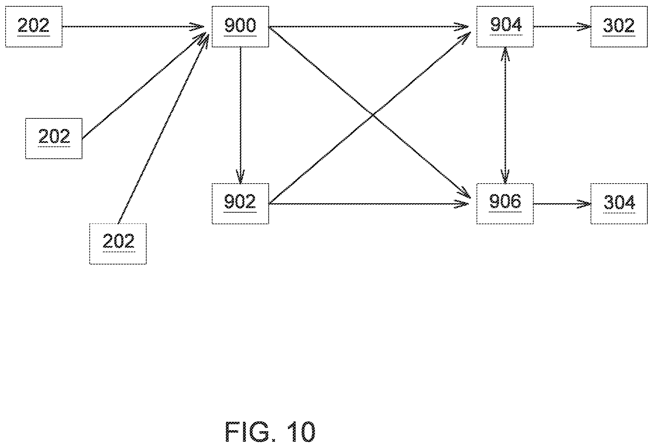

Referring now to FIGS. 9-10, FIG. 9 is a block diagram of a system boundary of a brake system (e.g., the brake system 300) and FIG. 10 is a block diagram of a functional architecture of a brake system (e.g., the brake system 300).

The brake system 300 includes a first controller 900. For instance, the first controller 900 may be a vehicle autonomy domain controller (e.g., the autonomous controller 204). In some example embodiments, the brake system 300 may include more than one controller. The first controller 900 is configured to receive a signal to stop the vehicle in autonomy (e.g., the stopping signal 202). For example, the signal may be generated from a sensor (e.g. an object is in front of the vehicle), a predefined parameter or tendering stop (e.g., as required by a job computer), or a manual trigger such as from a remote operator requesting to stop the vehicle.

The brake system 300 includes a second controller 902, a third controller 904, and a fourth controller 906. One or more of the first controller 900, the second controller 902, the third controller 904, and the fourth controller 906 disclosed herein may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The first controller 900 is communicatively coupled to the second controller 902, the third controller 904, and the fourth controller 906. The second controller 902 may be communicatively coupled to a powertrain of the vehicle 100. For example, a drive strategy logic in charge of determining if the transmission clutch is to be engaged or disengaged and which direction the transmission 127 should be set to (e.g., forward, neutral, reverse) is located on the second controller 902. The third controller 904 is configured to control the primary brake 302. The fourth controller 906 is configured to control the redundant brake 304. Additionally, the fourth controller 906 is configured to control the transmission clutch. For example, the decision whether the transmission clutch is to be engaged or disengaged is sent from the second controller 902 to the fourth controller 906 which controls the transmission clutch.

Accordingly, in response to a requested stop, the first controller 900 receives a stopping signal and communicates to the first, second, and fourth controllers 902, 904, 906 that a stop is required. In other words, the first controller 900 is configured to control the primary brake 302 and the redundant brake 304 in response to a stopping signal, and particularly, the first controller 900 is configured to cause the brake system 300 to actuate the primary brake 302 before the redundant brake 304. In order to do so, the first controller 900 communicates a first braking command to the second controller 902 to control the powertrain to set the transmission 127 to a neutral position (e.g., the first braking command includes a neutral command). Simultaneously, the first controller 900 communicates a second braking command to the third controller 904 to actuate the primary valve 306. The second braking command may include a modulated braking command. The modulated braking command may be a command based on driving conditions such as a distance, speed, grade of the driving surface (e.g. an incline/decline), etc. in order to determine how and when to brake. In various embodiments, the distance may be the distance to a stopping point determined based on GPS coordinates. In various embodiments, the distance may be the distance to a stopping point determined based on a sensor measuring the distance between the vehicle 100 and an object the vehicle 100 may collide with. Based on the driving conditions, the primary valve 306 may be controlled via the modulated braking command to regulate the pressure in accordance with such driving conditions and effectively brake. For example, if the vehicle 100 is operating at a high speed, on a decline, and/or needs to brake within a short distance, the modulated braking command may cause the primary valve 306 to create a high braking pressure for faster braking. Additionally, the first controller 900 communicates a third braking command to the fourth controller 906 which is configured to communicate the stopping signal to the redundant brake 304 such that the redundant brake 304 is engaged at a second time interval. For example, the redundant brake 304 is engaged after a period of time ranging between 0-10 seconds. When the redundant brake 304 is engaged, the first controller 900 communicates to the third controller 904 to disengage the primary brake 302.

Alternatively, if the fourth controller 906 determines the vehicle is still in motion within the second time internal (e.g., between 0-10 seconds), the fourth controller 906 will engage the redundant brake 304. Alternatively, the redundant brake 304 is configured to be engaged in response to a failed status communicated to the fourth controller 906 from the third controller 904. The failed status may indicate any type of failure in the primary brake 302, e.g., a controller broke, a fuse blew, pressure is lost because a pump is failing, a controller cannot complete a wake-up process, a wire is cut, etc.

Additionally, the redundant brake 304 is configured to be engaged in response to a zero-speed status communicated to the fourth controller 906 from the second controller 902. Alternatively, the redundant brake 304 is configured to be engaged in response to a zero-speed status determined by the fourth controller 906. For example, the redundant brake 304 is configured to be engaged in response to a zero-speed status determined by the fourth controller 906 within the second time interval via a sensor (not shown). Accordingly, the redundant brake 304 may function as a brake hold to maintain the vehicle 100 in a stationary position. The brake hold is a decision to leave the redundant brake 304 engaged for an indefinite period of time, until the fourth controller 906 received a command to release the redundant brake 304.

In various example embodiments, the second controller 902 may be configured to communicate with the third controller 904 such that a braking command may be communicated to engage the primary brake 302 to prevent overspeed. For example, the vehicle (e.g., a tractor plus an implement) is heavy, thus a target application speed (e.g., 5 kph, 15 kph for tillage, etc.) is desirable to keep the vehicle within a certain stopping distance (e.g., no more than 5 meters to come to stop, depending on speed), especially while operating on a decline. Thus, a braking command dictating a percent max pressure to maintain the desired speed can be communicated to prevent overspeed.

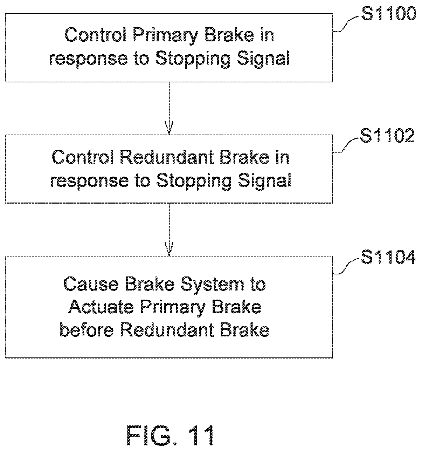

FIG. 11 is a flow chart of a method of operating a brake system according to one or more example embodiments.

The flow chart of FIG. 11 is implemented by the brake system 300. At S1100, a primary brake (e.g., primary brake 302) is controlled in response to a stopping signal. The primary brake may be an electrohydraulic brake. At S1102, a redundant brake (e.g., redundant brake 304) is controlled in response to a stopping signal. The redundant brake may be a spring actuated. At S1104, the brake system is configured to actuate the primary brake before the redundant brake. In various example embodiments, a powertrain is controlled to set a neutral position. In various example embodiments, a primary valve (e.g., primary valve 306) of the primary brake is actuated. In various example embodiments, the redundant brake is engaged at a second time interval. For example, if it is determined that a vehicle the brake system is installed in is still in motion after the second time internal (e.g., between 0-10 seconds), the redundant brake will be engaged. In various example embodiments, the redundant brake is engaged in response to a failed status of the primary brake. In various example embodiments, the redundant brake is engaged in response to a zero-speed status. Accordingly, the redundant brake may function as a brake hold to maintain the vehicle in a stationary position.

Example embodiments being thus described, it will be obvious that the same may be varied in many ways. Such variations are not to be regarded as a departure from the spirit and scope of example embodiments, and all such modifications as would be obvious to one skilled in the art are intended to be included within the scope of the claims.

The description of example embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. These modifications are intended to be included within the scope of the disclosure.

Embodiments of the invention can be described with reference to the following numbered clauses, with preferred features laid out in dependent clauses:
1. A brake system comprising:
   a primary brake, the primary brake being an electrohydraulic brake;
   a redundant brake, the redundant brake being spring actuated; and
   at least one controller configured to control the primary brake and the redundant brake in response to a stopping signal such that the at least one controller is configured to cause the brake system to actuate the primary brake and the redundant brake simultaneously or sequentially.
2. The brake system of clause 1, wherein the at least one controller includes a first controller and a second controller, the second controller communicatively coupled to the first controller and a powertrain.
3. The brake system of clause 2, wherein the at least one controller further includes a third controller communicatively coupled to the first controller and the primary brake.
4. The brake system of clause 3, wherein the at least one controller further includes a fourth controller communicatively coupled to the first controller and the redundant brake.
5. The brake system of clause 4, wherein
   the primary brake includes a primary valve and a pressure sensor operatively coupled to the primary valve;
   in response to the first controller receiving the stopping signal, the first controller is configured to communicate a first braking signal to the second controller, a second braking signal to the third controller, and a third braking signal to the fourth controller;
   the second controller is configured to control the powertrain to set a neutral position; and
   the third controller is configured to actuate the primary valve.
6. The brake system of clause 5, wherein the fourth controller is configured to communicate the third braking signal to the redundant brake such that the redundant brake is configured to be engaged at a second time interval.
7. The brake system of clause 5, wherein the redundant brake is configured to be engaged in response to a failed status communicated to the fourth controller from the third controller.
8. The brake system of clause 5, wherein the redundant brake is configured to be engaged in response to a zero-speed status communicated to the fourth controller from the second controller.
9. The brake system of clause 1, wherein the redundant brake is coupled to a drive shaft.
10. The brake system of clause 1, wherein the redundant brake further comprises supply and return hose connections.
11. The brake system of clause 1, wherein the stopping signal is initiated by at least one of a sensor, a predefined parameter, and a manual trigger.
12. A vehicle comprising:
   a chassis;
   a drive shaft; and
   a brake system including
      a primary brake, the primary brake being an electrohydraulic brake;
      a redundant brake coupled to the chassis and the drive shaft, the redundant brake being spring actuated; and
      at least one controller configured to control the primary brake and the redundant brake in response to a stopping signal such that the at least one controller is configured to cause the brake system to actuate the primary brake and the redundant brake simultaneously or sequentially.
13. The vehicle of clause 12, wherein the drive shaft is a mechanical front wheel drive shaft.
14. The vehicle of clause 12, further comprising a plate, the plate configured to couple to the redundant brake and the chassis.
15. The vehicle of clause 12, further comprising a brake resolution manifold in fluid communication with the primary brake.
16. The vehicle of clause 12, wherein the at least one controller includes a first controller and a second controller, the second controller communicatively coupled to the first controller and a powertrain.
17. The vehicle of clause 16, wherein the at least one controller includes a third controller communicatively coupled to the first controller and the primary brake.
18. The vehicle of clause 17, wherein the at least one controller includes a fourth controller communicatively coupled to the first controller and the redundant brake.
19. The vehicle of clause 18, wherein
   the primary brake includes a primary valve and a pressure sensor operatively coupled to the primary valve;
   in response to the first controller receiving the stopping signal, the first controller is configured to communicate a first braking signal to the second controller, a second braking signal to the third controller, and a third braking signal to the fourth controller;
   the second controller is configured to control the powertrain to set a neutral position; and
   the third controller is configured to actuate the primary valve.
20. The vehicle of clause 19, the fourth controller is configured to communicate the stopping signal to the redundant brake such that the redundant brake is configured to be engaged at a second time interval.
21. The vehicle of clause 19, wherein the redundant brake is configured to be engaged in response to a failed status communicated to the fourth controller from the third controller.
22. The vehicle of clause 19, wherein the redundant brake is configured to be engaged in response to a zero-speed status communicated to the fourth controller from the second controller.
23. The vehicle of clause 12, wherein the redundant brake is coupled to a drive shaft.
24. The vehicle of clause 12, wherein the redundant brake further comprises supply and return hose connections.
25. The vehicle of clause 12, wherein the stopping signal is initiated by at least one of a sensor, a predefined parameter, and a manual trigger.
26. A method of operating a brake system, the method comprising:
   controlling a primary brake in response to a stopping signal, the primary brake being an electrohydraulic brake;
   controlling a redundant brake in response to a stopping signal, the redundant brake being spring actuated; and
   causing the brake system to actuate the primary brake and the redundant brake simultaneously or sequentially.
27. The method of clause 26, further comprising:
   controlling a powertrain to set a neutral position.
28. The method of clause 26, further comprising:
   actuating a primary valve of the primary brake.
29. The method of clause 26, further comprising:
   engaging the redundant brake at a second time interval.
30. The method of clause 26, further comprising:
   engaging the redundant brake in response to a failed status of the primary brake.
31. The method of clause 26, further comprising:
   engaging the redundant brake in response to a zero-speed status.

## Claims

1. A brake system comprising:
a primary brake, the primary brake being an electrohydraulic brake;
a redundant brake, the redundant brake being spring actuated; and
at least one controller configured to control the primary brake and the redundant brake in response to a stopping signal such that the at least one controller is configured to cause the brake system to actuate the primary brake and the redundant brake simultaneously or sequentially.

2. The brake system of claim 1, wherein the at least one controller includes a first controller and a second controller, the second controller communicatively coupled to the first controller and a powertrain.

3. The brake system of claim 2, wherein the at least one controller further includes a third controller communicatively coupled to the first controller and the primary brake.

4. The brake system of claim 3, wherein the at least one controller further includes a fourth controller communicatively coupled to the first controller and the redundant brake.

5. The brake system of claim 4, wherein
the primary brake includes a primary valve and a pressure sensor operatively coupled to the primary valve;
in response to the first controller receiving the stopping signal, the first controller is configured to communicate a first braking signal to the second controller, a second braking signal to the third controller, and a third braking signal to the fourth controller;
the second controller is configured to control the powertrain to set a neutral position; and
the third controller is configured to actuate the primary valve.

6. The brake system of claim 5, wherein the fourth controller is configured to communicate the third braking signal to the redundant brake such that the redundant brake is configured to be engaged at a second time interval.

7. The brake system of claim 5, wherein the redundant brake is configured to be engaged in response to a failed status communicated to the fourth controller from the third controller.

8. The brake system of claim 5, wherein the redundant brake is configured to be engaged in response to a zero-speed status communicated to the fourth controller from the second controller.

9. The brake system of any one of the preceding claims, wherein the redundant brake is coupled to a drive shaft, and the redundant brake further comprises supply and return hose connections.

10. The brake system of any one of the preceding claims, wherein the stopping signal is initiated by at least one of a sensor, a predefined parameter, and a manual trigger.

11. A vehicle comprising:
a chassis;
a drive shaft; and
a brake system according to any one of the preceding claims.

12. The vehicle of claim 11, wherein the drive shaft is a mechanical front wheel drive shaft.

13. The vehicle of claim 11, wherein the at least one controller includes a first controller, a second controller, a third controller, and a fourth controller, the second controller is communicatively coupled to the first controller and a powertrain, the third controller is communicatively coupled to the first controller and the primary brake, and the fourth controller is communicatively coupled to the first controller and the redundant brake.
